# EUROPEAN PATENT SPECIFICATION

(11) **EP 3 549 052 B1**
(45) Date of publication and mention of the grant of the patent: **07.10.2020**
(21) Application number: 18807101.3
(22) Date of filing: 28.11.2018
(51) Int. Cl.: G06K 7/00, G06F 13/00, H01R 35/00

(54) **RFID READER WITH TURNABLE USB CONNECTOR**
RFID-LESEGERÄT MIT DREHBAREM USB-ANSCHLUSS
LECTEUR RFID DOTÉ D'UN CONNECTEUR USB PIVOTANT

(30) Priority: 30.11.2017 EP 17204671; 23.02.2018 EP 18158299
(43) Date of publication of application: 09.10.2019
(73) Proprietor: ELATEC GmbH, 82178 Puchheim (DE)
(72) Inventor: HAERTEL, Stefan, 82178 Puchheim (DE); ZELENY, Matthias, 82256 Fürstenfeldbruck (DE)
(74) Representative: Lohr, Jöstingmeier & Partner
(86) International application number: PCT/EP2018/082861
(87) International publication number: WO 2019/106021

(56) References cited:
- DE-U1- 20 105 908
- JP-A- 2011 039 694
- US-A1- 2006 138 232
- US-A1- 2008 133 815
- US-A1- 2009 273 445
- US-A1- 2011 159 704
- US-A1- 2011 227 535
- US-A1- 2013 149 893
- US-A1- 2014 017 918

## Description

### Field of the invention

The invention relates to a secure retrofit RFID reader for printer solutions.

### Description of the related art

Data security becomes more and more important in commercial environments. In companies with central printer solutions limited access to sensible data content is not guaranteed. Unintended publication of sensible information as well as spying on corporate secrets by visitors or other employees capturing printed documents from the printer station may occur. Secure printing solutions with RFID readers for identifying a user at the printer station are known. Older printing systems do not have such an identifying system. Therefore, a retrofit solution for older printing systems without a RFID reader is needed.

JP5227917B2 (corresponding to JP 2011-39694 A) discloses a handy type RFID (Radio Frequency Identification) reader. The reader has a reader body with a USB cable connected thereto. The USB cable is for connecting the reader to a printing system without a RFID reader unit. The reader needs a storage area and the USB plug may be disconnected easily by an unauthorized person.

US 2014/0017918 A1 discloses a network terminal with a tiltable USB connector coupled by a slipring to the housing.

US 2009/0273445 A1 discloses a RFID reader with a fixed USB connector.

US 2013/149893 A1 discloses a power adapter cord including a rotatable connector having a slipring.

US 2011/0227535 A1 discloses a charge clip for cellular telephones including a power conversion plug which can be inserted in 90° displaced positions into the clip.

US 2008/133815 A1 discloses a USB hub with a stationary base station and a removable second hub. The removable second hub has a rotatable USB connector which forms together with a power connector a friction fit to hold the hub in a rim of the stationary base station.

US 2011/159704 A1 discloses an electrical power receptacle with rotatable USB jacks.

DE 20105 908 U1 discloses a USB card reader with rotatable USB connector.

US 2006/0138232 A1 discloses a combined barcode scanner and radio frequency identification reader with field interpretation array.

### Summary of the invention

The problem to be solved by the invention is to provide a simple and inexpensive solution for a retrofit RFID reader which may be attached to a printer or any other electronic device. The solution has to be flexible as well as easily connectable to different printer systems. Furthermore, the RFID reader shall be small and visually appealing in its design.

Solutions of the problem are described in the independent claims. The dependent claims relate to further improvements of the invention.

The RFID reader circuit comprises at least one antenna and an RFID transmitter/receiver circuit connected to the at least one antenna. The transmitter/receiver circuit may be attached next to the antenna. The antenna may be integrated into the RFID transmitter/receiver circuit, e.g. on the same printed circuit board.

The USB connector is connected to the RFID transmitter/receiver circuit by a cable and/or a plurality of wires. The cable and/or wires may be flexible. A cable and/or wire connection is preferred over a sliding contact or slipring connection as it has a higher reliability and lower costs. Specifically, in a long-time installation with no movement, a slip ring suffers from contact corrosion. Cable break is no issue, as there normally is only a low number of movements during installation.

The USB connector may be mechanically connected to the housing at a connector section of the housing by a turnable attachment means.

The housing comprises a sensor section and a connector section, which preferably are coupled together. Coupling may be done by at least one clip and/or by glue between the sections.

The housing preferably comprises a top part and a bottom part, both parts preferably comprising a plastic material. The top part preferably comprises the sensor section which may support the RFID reader circuit. The top part may have an additional LED for displaying the status of the RFID reader.

The sensor section preferably is part of the housing and preferably of a detection zone for an RFID transponder. The sensor section may be part of a lid, respectively of the top part of the housing and may contain an antenna within the lid. The antenna may also be aligned below the lid within the housing. The antenna may be attached to a circuit board for mechanically supporting the antenna.

The sensor section of the housing preferably has an essentially planar outer surface and holds the RFID reader circuit within the housing.

The bottom part of the housing preferably holds the USB connector at the connector section. The USB connector may be a USB plug connector attached to the housing. Plug connector means a male USB plug.

The connector section of the housing preferably has an essentially planar outer surface preferably opposing to the outer surface of the sensor section.

The connector section may be distant from the sensor section. The USB connector preferably is orthogonal to the main plane of the antenna. The alignment of the USB connector improves the receiving characteristics of the antenna. In general, metal parts in the proximity of the antenna influence the characteristics of the antenna and the transmitting/receiving properties. A large series of tests have shown, that a USB connector, which usually has an outer metal shield, has at least a reproduceable and therefore compensable influence if positioned at a defined position relative to the antenna. Rotating such a connector about an axis orthogonal (which is the same as perpendicular) to the main plane of the antenna results in negligible changes of the influence of the connector.

The connector section of the housing preferably has an opening from an inner surface to an outer surface for the attachment means. The attachment means has a support, which may cover the opening at its outer surface. The opening may be stepped. Stepped means that the opening has a first diameter which corresponds to the thickness and the diameter of the support, but it is only a counter-bore. The opening may have a second diameter which is smaller than the first diameter and extends from the inner surface to the outer surface. The support may be a circular disc. The support may have an opening for holding a USB plug connector. The attachment means further may have at least two holding protrusions connected to the attachment means. The protrusions may protrude orthogonally from a surface of the attachment means. The attachment means may further have a catch for holding the USB plug in the opening of the attachment means. The opening of the connector section may have at least two notches at the sidewall of the opening. The term "Sidewall" relates to the surface orthogonal with respect to the outer surface, respectively the inner surface. The notches preferably match to the holding protrusions for inserting the attachment means with the holding protrusions into the opening.

In an assembled state, the attachment means preferably is inserted into the opening of the connector section. The attachment means may be rotated such that the inner surface of the housing bears the holding protrusions.

Preferably, at least one stop is provided on the inner surface of the housing, respectively the bottom part, which preferably has a wedged shape for limiting the rotation of the attachment means. The stop may also have a concave or convex shape. The stop may interact with at least one holding protrusion, such that the attachment means may be rotated from a position where the holding protrusions are close to the notches, to at least one position where the holding protrusions are distant from the notches and blocked to rotate back afterwards. The USB connector may also be turnable within an angle of less than 200 degrees, preferably 160 degrees, most preferably within an angle of 90 degrees. To limit the degree of rotation, another stop may be provided to the inner surface of the housing at the opening.

The attachment means may form a planar surface with the housing surface, respectively the outer surface of the bottom part. The USB connector may protrude orthogonally from the housing such that it may protrude orthogonally to a main plane of the at least one antenna from the housing.

Preferably, the USB connector is a double-sided connector, which may be plugged into a USB socket in two positions rotated for 180°. In conjunction with a double-sided USB connector, the RFID reader may nearly be rotatable around 360° while the connector only rotates maximal about 90°, which prevents twisting of the cable. There may also be a button for locking/unlocking rotation.

A first pair of detents may be opposing each other around the opening. A second pair of detents may be opposing each other around the opening. The connecting line between the first pair of detents and the second pair of detents crosses in a right angle. Thus, the detents are shifted by 90 degrees. The holding protrusions may have indents corresponding to the detents for giving a haptic feedback when rotating the holding protrusion over the detents.

The housing may have an angle indicator which may be an arrow with two position indicators. The position indicators may correspond to one position indicator at the support. The arrow and the position indicators at the bottom part of the housing show the possible angle of rotation of the support. The housing may have an adhesive surface for mounting the RFID reader to a surface of a printer system. The adhesive surface may comprise an adhesive tape. Alternatively, an assembly bracket may be used. It may be mounted at different locations of the housing.

There may be means for locking the USB connector in specific rotated states like in angular positions of 0° and 180° preferably with respect to a longitudinal axis of the housing. There may be other angular steps like 90°, 45°, 30° or 10°.

The housing may have an additional USB socket which is connected to the RFID transmitter/receiver circuit. The USB socket may be attached flush-fitting with the surface of the top part of the housing. The USB socket may also be connected to the printer via the USB connector. The USB socket of the RFID reader may be used for connecting a USB dongle to the RFID reader for identifying a user or for connecting a standard USB device to the RFID reader or to the printer via the RFID reader to send documents to the printer. Basically, the USB socket may be a replacement for the USB socket of the printer used by the RFID reader, such that other USB devices may still be connected to the printer. The USB socket may be disconnected by a mechanical or an electronic switch.

The USB connector as well as the USB socket may be of type A, B, or C. The RFID reader may have further USB sockets.

The RFID reader may have an adhesive tape at the same plane as the USB connector which protrudes from the housing for connecting the RFID reader to another surface. That means that the adhesive tape may be aligned to the housing at the outer surface of the bottom side of the housing. The adhesive tape is for connecting the RFID reader to a surface, for example of a printer station. Adhesive tape means a double-sided tape. A double-sided tape may be used which prevents the removal the RFID tag from the surface it is attached to. Thus, removal might only be done with a high degree of necessary force or by destroying the RFID reader.

The RFID reader may further comprise a secure access module (or secure application module), also called SAM module or a smartcard reader for a SAM which is based on SmartCard Integrated Circuits. The SAM is used to enhance the security and cryptography performance in devices, commonly in devices needing to perform secure transactions, such as printer stations. It may be used for cryptographic computation and secure authentication against smartcards or contactless EMV cards. Physically, a SAM card may either be a SIM card and plugged into a SAM slot in a reader attached to the RFID reader, or a fixed integrated circuit in a housing directly soldered on a printed circuit board of the RFID reader.

Basically, this RFID reader may be used for any device or application which has an USB connector. Instead of the USB connector any other bus connector may be used.

Generally, a RFID reader circuit may comprise a microcontroller and a reader IC to communicate over the RF interface with a contactless smartcard. The microcontroller takes the part of controlling the reader IC functions, such as protocol handling, command flow and data interpretation. By integrating a SAM into the reader system, the SAM handles all the key management and cryptography in a secure way. The entire system enables authentication and encryption of the contactless communication between the SAM and host system.

The housing of the RFID reader may have a lockable cover within the sensor section. The lockable cover covers the SAM module. The SAM module may be attached to the housing within the area of the antenna, respectively within the sensing area. The antenna is attached on the upper surface of the top part of the housing. The antenna may also be attached below the upper part within the housing. The lockable cover may be covered by a security label. The security label prevents an unauthorized opening of the lockable cover. The security label may be irreparably damaged by an attempt to remove it.

### Brief description of the drawings

Fig. 1 shows a 3D view of an RFID reader.
Fig. 2 shows a front view of an RFID reader.
Fig. 3 shows a bottom view of an RFID reader.
Fig. 4 shows a 3D view of an RFID reader.
Fig. 5 shows a 3D view of an RFID reader.
Fig. 6 shows the bottom part of the RFID reader.
Fig. 7 shows the attachment means in a top view.
Fig. 8 shows the attachment means in a bottom view.
Fig. 9 shows the bottom part of the RFID reader with the attachment means.

### Detailed description of the invention

In the following, preferred embodiments of the invention will be described with reference to the drawings. The same or similar elements or elements having the same effect may be indicated by the same reference number in multiple drawings. Repeating the description of such elements may be omitted in order to prevent redundant descriptions.

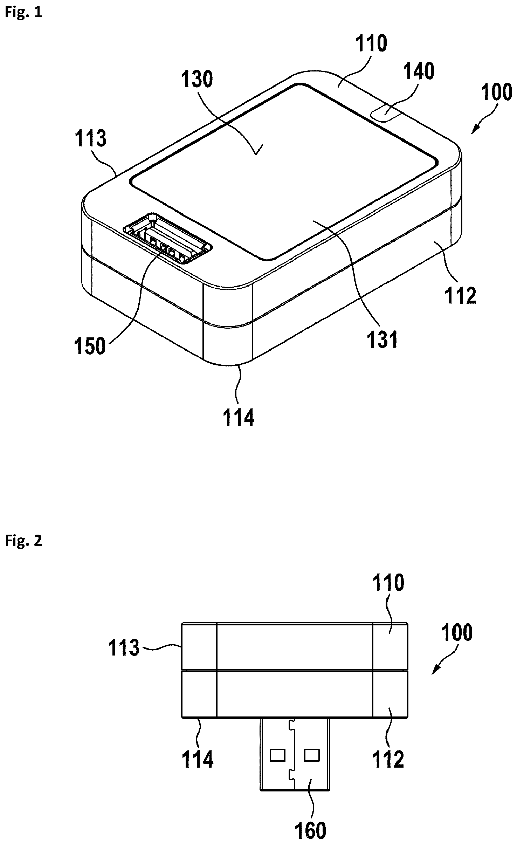

Fig. 1 shows a 3D view of a RFID reader 100. The RFID reader 100 comprises a housing 110 with a top part 113 and a bottom part 114 with an outer surface 112 forming the housing 100. The top part 113 has a sensor section 130 to communicate with an RFID transponder attached or held by a user next to the sensor section 130. It further has an LED 140 for displaying the status of the RFID reader 100. The top part 113 of the housing 110 also has an USB socket 150. The USB socket 150 is attached flush-fitting with the surface of the top part 113 of the housing 110. An antenna 131 may be attached to the sensor section 130.

Fig. 2 shows a front view of the RFID reader 100. The housing 110 has a USB connector 160 formed as USB plug protruding orthogonally thereof respectively from the bottom part 114 of the housing 110. The USB connector 160 is for connecting the RFID reader 100 to a USB socket. The USB connector 160 is attached to an attachment means 200. The attachment means 200 is attached to the housing 110. The attachment means 200 allows to rotate the USB connector 160 by 90 degrees within the housing 110. The top part 113 and a bottom part of the housing 110 as well as the USB connector 160 are apparent from the drawing. The bottom part 114 of the housing 110 has a USB connector 160 protruding orthogonally thereof. The USB connector 160 is for connecting the RFID reader 100 to a USB socket. The USB connector 160 is attached to an attachment means 200. The attachment means 200 allows to rotate the USB connector 160 by 90 degrees.

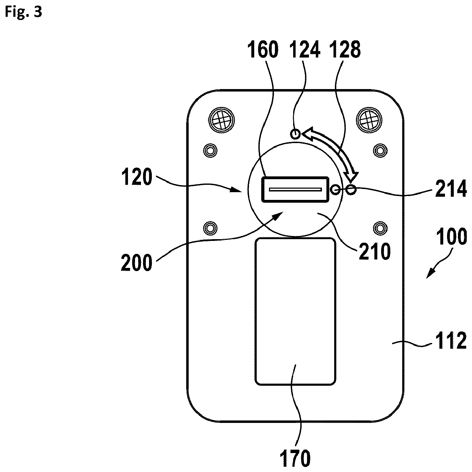

Fig. 3 shows a bottom view, respectively the bottom part 114 of an RFID reader 100. The bottom part 114 has an outer surface 112. The USB connector 160 protrudes orthogonally from the bottom part 114 of the housing 110 of the RFID reader 100. The attachment means 200 is aligned to the bottom part 114 of the housing 110. The attachment means 200 has a support 210 flushing with the outer surface 112 of the bottom part 114 of the housing 110. An arrow 128 with two position indicators 124 is attached to the housing 110. The position indicators 124 correspond with one position indicator 214 at the support 210. The arrow 128 and the position indicators 124 at the bottom part 114 of the housing 110 show the possible angle of rotation of the support 200. The housing 110 has an adhesive surface 170 for mounting the RFID reader 100 to a surface of a printer system or any other electronic device.

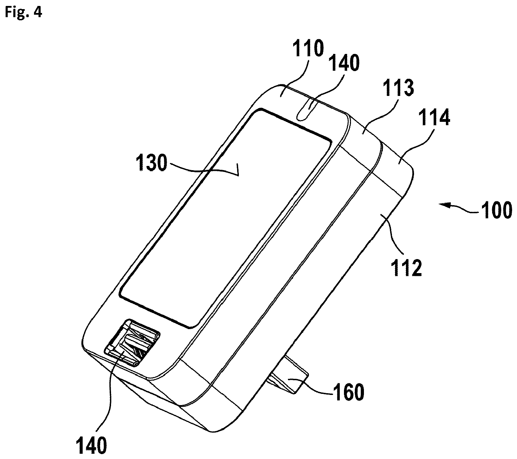

Fig. 4 shows another 3D view of the RFID reader 100.

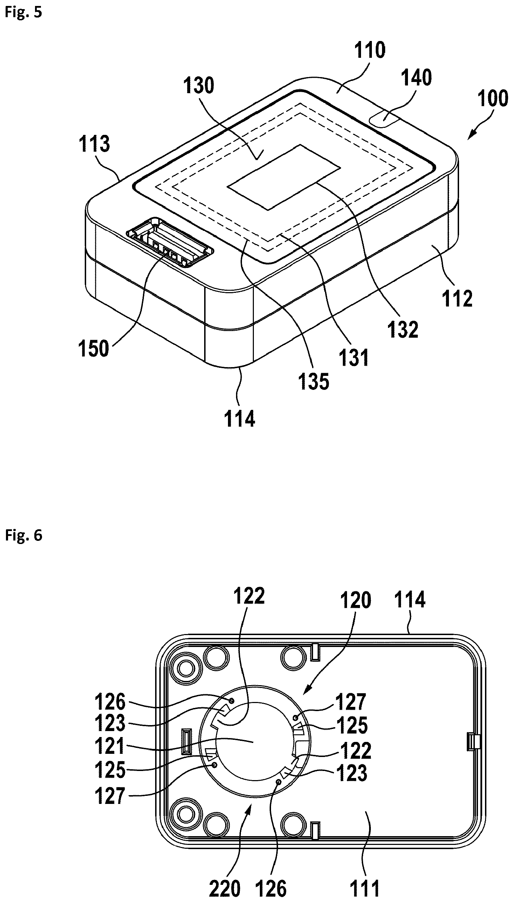

Fig. 5 shows a 3D view of the RFID reader 100 according to Fig. 1. The RFID reader has a lockable cover 132 within the sensor section 130. The lockable cover 132 covers a SAM module 133 (not shown). The SAM module 133 is attached to housing within an antenna 131. The antenna 131 is attached on the upper surface of the top part 113 of the housing 110, or attached below the upper part within the housing 110. The lockable cover 132 may be covered by a security label 135. The security label 135 prevents an unauthorized opening of the lockable cover 132.

Fig. 6 shows the bottom part 114 of the RFID reader 100 in an open state from a top view. The opening 121 is graded in its height. The view shows the inner surface 111 of the bottom part 114. The bottom part 114 has a connector section 120. The connector section 120 comprises an opening 121 from the outer surface 112 to the inner surface 111 of the bottom part 114 for an attachment means 200. The opening has two additional notches 122. The opening has two stops 123 at the inner surface around the opening 121 next to the two notches 122. The stops 123 are wedge-shaped. Around the opening 121 there are two additional stops 125. A first pair of detents 126 is attached opposing each other around the opening 121. A second pair of detents 127 is attached opposing each other around the opening 112. The detents 126, 127 preferably are shifted by 90 degrees.

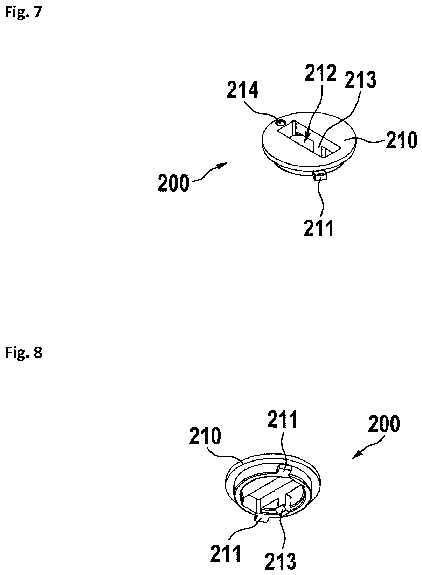

Fig. 7 shows an attachment means 200. The attachment means 200 has a support 210. The support 210 forms a ring corresponding to the graded opening 121. The attachment means 200 has two holding protrusions 211 protruding orthogonally from the attachment means 200. The holding protrusions 211 correspond to the notches 122. The attachment means has an opening 212 for holding the USB connector 160.

Fig. 8 shows an attachment means 200 according to Fig. 7 with a catch 213 for holding the USB connector 160.

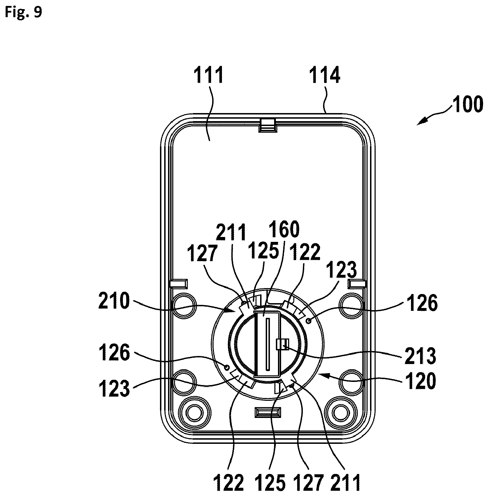

Fig. 9 shows an open housing 110 of the RFID reader 100 with an attachment means 200 inserted in the opening 121. The attachment means 200 has been turned after inserting into the opening 121. Thus, the holding protrusion 211 glides over the wedge-shaped stop 123. The stop 125 limits the rotation of the attachment means 200.

Although the invention has been illustrated and described in detail by the embodiments explained above, it is not limited to these embodiments. Other variations may be derived by the skilled person.

### List of reference numerals

- 100: RFID reader
- 110: housing
- 111: inner surface
- 112: outer surface
- 113: top part
- 114: bottom part
- 120: connector section
- 121: opening
- 122: notch
- 123: stop
- 124: position indicator
- 125: stop
- 126: first pair of detents
- 127: second pair of detents
- 128: arrow
- 130: sensor section
- 131: antenna
- 132: lockable cover
- 133: SAM
- 135: security label
- 140: LED
- 150: USB socket
- 160: USB connector
- 170: adhesive surface/tape
- 200: attachment means
- 210: support
- 211: holding protrusion
- 212: opening
- 213: catch
- 214: position indicator

## Claims

1. RFID reader (100) comprising a housing (110), an RFID reader circuit, and a USB connector (160), the housing comprises a sensor section (130) and a connector section (120),
the RFID reader circuit comprises at least one antenna (131) and an RFID transmitter/receiver circuit connected to the at least one antenna (131), said antenna (131) defining a main plane,
the USB connector (160) is electrically connected to the RFID transmitter/receiver circuit by a cable and/or a plurality of wires,
the sensor section (130) of the housing (110) contains the RFID reader circuit within the housing, and
**characterized in that**
the connector section (120) of the housing (110) holds the USB connector (160) by a turnable attachment means (200), wherein the turnable attachment means allows only a rotation of the connector about an axis orthogonal to the main plane.

2. RFID reader (100) according to claim 1,
**characterized in that**
the sensor section (130) of the housing (110) has a planar outer surface, parallel to the main plane, and
the connector section (120) of the housing (110) has a planar outer surface opposing to the outer surface of the sensor section (130).

3. RFID reader (100) according to claim 1 or 2,
**characterized in that**
the connector section (120) of the housing (110) has an opening (121) from an inner surface (111) of the housing (110) to an outer surface (112) of the housing (110) for the attachment means (200),
the attachment means (200) has a support (210) covering the outer surface (112) of the housing (110) and
the attachment means (200) further has at least two holding protrusions (211) connected to the support (210).

4. RFID reader (100) according to claim 3,
**characterized in that**
the opening (121) has at least two notches (122) at a sidewall of the opening (121), the notches (122) matching the holding protrusions (211) for inserting the attachment means (200) with the holding protrusions (211) into the opening (121).

5. RFID reader (100) according to claim 3 or 4,
**characterized in that**
in an assembled state, when the attachment means (200) is inserted into the opening (121), the attachment means (200) may be rotated such that the inner surface (111) bears the holding protrusions (211).

6. RFID reader (100) according to claim 3, 4 or 5,
**characterized in that**
at least one stop (123) is provided on the inner surface (111) and which interacts with at least one holding protrusion (211), such that the attachment means (200) may be rotated from a position where the holding protrusions (211) are close to the notches (122) to at least one position where the holding protrusions (211) are distant from the notches (122) and blocked to rotate back afterwards.

7. RFID reader (100) according to any of the previous claims,
**characterized in that**
the attachment means (200) forms a planar surface with the outer surface of the housing (110).

8. RFID reader (100) according to any of the previous claims,
**characterized in that**
the housing (110) has a USB socket (150) which is connected to the RFID transmitter/receiver circuit.

9. RFID reader (100) according to any of the previous claims,
**characterized in that**
the USB connector (160) is a plug connector (160).

10. RFID reader (100) according to any of the previous claims,
**characterized in that**
the USB connector (160) is a double-sided connector.

11. RFID reader (100) according to any of the previous claims,
**characterized in that**
the RFID reader (100) comprises a secure access module SAM (133).

12. RFID reader (100) according to claim 11,
**characterized in that**
the RFID reader (100) comprises a smartcard reader for a secure access module SAM (133).

13. RFID reader (100) according to claim 11 and 12,
**characterized in that** a lockable cover (132) in the sensor section (130) is provided above the SAM module (133) or the smartcard reader.

14. RFID reader (100) according to claim 13,
**characterized in that**
the lockable cover (132) in the sensor section (130) is covered by a security label (135) for preventing the opening of the lockable cover
wherein
the security label (135) will be irreparably damaged by an attempt to remove it.

15. RFID reader (100) according to any of the previous claims,
**characterized in that**
the RFID reader (100) has an adhesive tape (170) at the same plane as the USB connector (160) protruding from the housing (110) for attaching the RFID reader (100) to another surface.

## Patentansprüche

1. RFID-Leser (100), umfassend ein Gehäuse (110), eine RFID-Leserschaltung und einen USB-Anschluss (160), wobei das Gehäuse einen Sensorabschnitt (130) und einen Anschlussabschnitt (120) umfasst,
wobei die RFID-Leserschaltung mindestens eine Antenne (131) und eine mit der mindestens einen Antenne (131) verbundene RFID-Sender/Empfänger-Schaltung umfasst, wobei die Antenne (131) eine Hauptebene definiert,
wobei der USB-Anschluss (160) elektrisch mit der RFID-Sender/Empfänger-Schaltung durch ein Kabel und/oder eine Vielzahl von Drähten verbunden ist,
wobei der Sensorabschnitt (130) des Gehäuses (110) die RFID-Leserschaltung innerhalb des Gehäuses beinhaltet, und
**dadurch gekennzeichnet, dass**
der Anschlussabschnitt (120) des Gehäuses (110) den USB-Anschluss (160) durch ein drehbares Befestigungsmittel (200) hält, wobei das drehbare Befestigungsmittel nur eine Rotation des Anschlusses um eine orthogonal zur Hauptebene verlaufende Achse zulässt.

2. RFID-Leser (100) nach Anspruch 1,
**dadurch gekennzeichnet, dass**
der Sensorabschnitt (130) des Gehäuses (110) eine planare Außenfläche hat, die parallel zur Hauptebene ist, und
der Anschlussabschnitt (120) des Gehäuses (110) eine planare Außenfläche hat, die der Außenfläche des Sensorabschnitts (130) gegenüberliegt.

3. RFID-Leser (100) nach Anspruch 1 oder 2,
**dadurch gekennzeichnet, dass**
der Anschlussabschnitt (120) des Gehäuses (110) eine Öffnung (121) für das Befestigungsmittel (200) von einer Innenfläche (111) des Gehäuses (110) zu einer Außenfläche (112) des Gehäuses (110) hat,
das Befestigungsmittel (200) einen Träger (210) hat, der die Außenfläche (112) des Gehäuses (110) bedeckt, und
das Befestigungsmittel (200) weiterhin zumindest zwei Haltevorsprünge (211) hat, die mit dem Träger (210) verbunden sind.

4. RFID-Leser (100) nach Anspruch 3,
**dadurch gekennzeichnet, dass**
die Öffnung (121) zumindest zwei Kerben (122) an einer Seitenwand der Öffnung (121) hat, wobei die Kerben (122) mit den Haltevorsprüngen (211) übereinstimmen, zum Einführen des Befestigungsmittels (200) mit den Haltevorsprüngen (211) in die Öffnung (121).

5. RFID-Leser (100) nach Anspruch 3 oder 4,
**dadurch gekennzeichnet, dass**
in einem zusammengebauten Zustand, wenn das Befestigungsmittel (200) in die Öffnung (121) eingeführt ist, das Befestigungsmittel (200) so gedreht werden kann, dass die Innenfläche (111) die Haltevorsprünge (211) trägt.

6. RFID-Leser (100) nach Anspruch 3, 4 oder 5,
**dadurch gekennzeichnet, dass**
an der Innenfläche (111) mindestens ein Anschlag (123) vorgesehen ist und der mit mindestens einem Haltevorsprung (211) in Wechselwirkung tritt, so dass das Befestigungsmittel (200) von einer Position gedreht werden kann, in der sich die Haltevorsprünge (211) nahe an den Kerben (122) befinden, zu mindestens einer Position, in der die Haltevorsprünge (211) von den Kerben (122) beabstandet sind und die Haltevorsprünge (211) danach gegen ein Zurückdrehen blockiert sind.

7. RFID-Leser (100) nach einem der vorhergehenden Ansprüche,
**dadurch gekennzeichnet, dass**
dass das Befestigungsmittel (200) mit der Außenfläche des Gehäuses (110) eine ebene Fläche bildet.

8. RFID-Leser (100) nach einem der vorhergehenden Ansprüche,
**dadurch gekennzeichnet, dass**
das Gehäuse (110) eine USB-Buchse (150) aufweist, die mit der RFID-Sender/Empfängerschaltung verbunden ist.

9. RFID-Leser (100) nach einem der vorhergehenden Ansprüche,
**dadurch gekennzeichnet, dass**
der USB-Anschluss (160) ein Steckverbinder (160) ist.

10. RFID-Leser (100) nach einem der vorhergehenden Ansprüche,
**dadurch gekennzeichnet, dass**
dass der USB-Anschluss (160) ein doppelseitiger Anschluss ist.

11. RFID-Leser (100) nach einem der vorhergehenden Ansprüche,
**dadurch gekennzeichnet, dass**
der RFID-Leser (100) ein sicheres Zugriffsmodul SAM (secure access module) (133) umfasst.

12. RFID-Leser (100) nach Anspruch 11,
**dadurch gekennzeichnet, dass**
der RFID-Leser (100) einen Smartcard-Leser für ein sicheres Zugriffsmodul SAM (secure access module) (133) umfasst.

13. RFID-Leser (100) nach Anspruch 11 oder 12,
**dadurch gekennzeichnet, dass**
eine verschließbare Abdeckung (132) in dem Sensorabschnitt (130) über dem SAM-Modul (133) oder dem Smartcard-Leser bereitgestellt ist.

14. RFID-Leser (100) nach Anspruch 13,
**dadurch gekennzeichnet, dass**
die verschließbare Abdeckung (132) in dem Sensorabschnitt (130) durch ein Sicherheitsetikett (135) bedeckt ist, um das Öffnen der verschließbaren Abdeckung zu verhindern,
wobei
das Sicherheitsetikett (135) beim Versuch es zu entfernen, irreparabel beschädigt wird.

15. RFID-Leser (100) nach einem der vorhergehenden Ansprüche,
**dadurch gekennzeichnet, dass**
der RFID-Leser (100) ein Klebeband (170) in derselben Ebene aufweist, aus der der USB-Anschluss (160) vom Gehäuse (110) hervorsteht, um den RFID-Leser (100) an einer anderen Fläche zu befestigen.

## Revendications

1. Lecteur RFID (100) comprenant un boîtier (110), un circuit de lecteur RFID, et un connecteur USB (160), le boîtier comprend une section de capteur (130) et une section de connecteur (120),
le circuit de lecteur RFID comprend au moins une antenne (131) et un circuit d'émetteur/récepteur RFID connecté à l'au moins une antenne (131), ladite antenne (131) définissant un plan principal,
le connecteur USB (160) est connecté électriquement au circuit d'émetteur/récepteur RFID par un câble et/ou une pluralité de fils électriques,
la section de capteur (130) du boîtier (110) contient le circuit de lecteur RFID au sein du boîtier, et
**caractérisé en ce que**
la section de connecteur (120) du boîtier (110) maintient le connecteur USB (160) par un moyen de fixation tournant (200), dans lequel le moyen de fixation tournant permet uniquement une rotation du connecteur autour d'un axe orthogonal au plan principal.

2. Lecteur RFID (100) selon la revendication 1,
**caractérisé en ce que**
la section de capteur (130) du boîtier (110) comporte une surface extérieure plane, parallèle au plan principal, et
la section de connecteur (120) du boîtier (110) comporte une surface extérieure plane opposée à la surface extérieure de la section de capteur (130).

3. Lecteur RFID (100) selon la revendication 1 ou 2,
**caractérisé en ce que**
la section de connecteur (120) du boîtier (110) comporte une ouverture (121) d'une surface intérieure (111) du boîtier (110) à une surface extérieure (112) du boîtier (110) pour le moyen de fixation (200),
le moyen de fixation (200) comporte un support (210) couvrant la surface extérieure (112) du boîtier (110) et
le moyen de fixation (200) comporte en outre au moins deux saillies de maintien (211) connectées au support (210).

4. Lecteur RFID (100) selon la revendication 3,
**caractérisé en ce que**
l'ouverture (121) comporte au moins deux encoches (122) au niveau d'une paroi latérale de l'ouverture (121), les encoches (122) concordant avec les saillies de maintien (211) pour insérer le moyen de fixation (200) avec les saillies de maintien (211) dans l'ouverture (121).

5. Lecteur RFID (100) selon la revendication 3 ou 4,
**caractérisé en ce que**
dans un état assemblé, lorsque le moyen de fixation (200) est inséré dans l'ouverture (121), le moyen de fixation (200) peut être mis en rotation de telle sorte que la surface intérieure (111) supporte les saillies de maintien (211).

6. Lecteur RFID (100) selon la revendication 3, 4 ou 5,
**caractérisé en ce que**
au moins une butée (123) est prévue sur la surface intérieure (111) et qui interagit avec au moins une saillie de maintien (211), de telle sorte que le moyen de fixation (200) peut être mis en rotation d'une position où les saillies de maintien (211) sont proches des encoches (122) à au moins une position où les saillies de maintien (211) sont distantes des encoches (122) et bloquées pour entrer en rotation vers l'arrière ensuite.

7. Lecteur RFID (100) selon l'une quelconque des revendications précédentes,
**caractérisé en ce que**
le moyen de fixation (200) forme une surface plane avec la surface extérieure du boîtier (110).

8. Lecteur RFID (100) selon l'une quelconque des revendications précédentes,
**caractérisé en ce que**
le boîtier (110) comporte une prise USB (150) qui est connectée au circuit d'émetteur/récepteur RFID.

9. Lecteur RFID (100) selon l'une quelconque des revendications précédentes,
**caractérisé en ce que**
le connecteur USB (160) est un connecteur mâle (160).

10. Lecteur RFID (100) selon l'une quelconque des revendications précédentes,
**caractérisé en ce que**
le connecteur USB (160) est un connecteur à double face.

11. Lecteur RFID (100) selon l'une quelconque des revendications précédentes,
**caractérisé en ce que**
le lecteur RFID (100) comprend un module d'accès sécurisé SAM (133).

12. Lecteur RFID (100) selon la revendication 11,
**caractérisé en ce que**
le lecteur RFID (100) comprend un lecteur de carte intelligente pour un module d'accès sécurisé SAM (133).

13. Lecteur RFID (100) selon les revendications 11 et 12,
**caractérisé en ce que**
un couvercle verrouillable (132) dans la section de capteur (130) est prévu au-dessus du module SAM (133) ou du lecteur de carte intelligente.

14. Lecteur RFID (100) selon la revendication 13,
**caractérisé en ce que**
le couvercle verrouillable (132) dans la section de capteur (130) est couvert d'une étiquette de sécurité (135) pour empêcher l'ouverture du couvercle verrouillable
dans lequel
l'étiquette de sécurité (135) sera endommagée irrémédiablement par une tentative pour l'enlever.

15. Lecteur RFID (100) selon l'une quelconque des revendications précédentes,
**caractérisé en ce que**
le lecteur RFID (100) comporte une bande adhésive (170) au même plan que le connecteur USB (160) faisant saillie du boîtier (110) pour fixer le lecteur RFID (100) à une autre surface.
